# EUROPEAN PATENT APPLICATION

(11) **EP 4 650 994 A1**
(43) Date of publication of application: **19.11.2025**
(21) Application number: 24193274.8
(22) Date of filing: 07.08.2024
(51) Int. Cl.: G06F 21/32, H04L 9/40

(54) **MULTI-FACTOR AUTHENTICATION SYSTEM FOR FINANCIAL MANAGEMENT**

(30) Priority: 16.05.2024 JP 2024001556 U
(71) Applicant: Van, David, New Taipei City 220 (TW)
(72) Inventor: Van, David, New Taipei City 220 (TW)
(74) Representative: Straus, Alexander

(57) **Abstract**

A multi-factor authentication system for financial management may provide user a convenient and safe financial management service via enrolling with service for multi-factor authentication via an application. The user may log in the multi-factor authentication service platform during the enrollment phase via the application to acquire an account and obtain authority for use, thereby to access the service provided by the multi-factor authentication service platform via a financial management station system. In addition, during the financial management service, the user may acquire the financial management service in fewer steps and a more secure manner during an authentication phase with the multi-factor authentication service platform, thereby to enforce security for identity authentication. The multi-factor authentication for financial management may address concerns for the user property security and identity authentication during financial management.

## Description

### Field of the Invention

The invention is related to multi-factor authentication technique, especially a multi-factor authentication system for financial management.

### Background of the Invention

Financial management service refers to service such as currency transaction, property management, insurance management, personal finance, or the like. Financial management service may be provided by bank, securities dealer, insurance company, investment advisory company, or the like.

Current user identity authentication for a financial management service is generally achieved by using identification device (such as debit card), password, certificate or seal to verify identity of the user. For example, during operation of an automated teller machine (ATM) for financial transaction, debit card and password of the user may be provided for identity authentication. In another example, during counter service at a bank, deposit book, certificate, seal and password of the user may be provided to facilitate bank personnel to confirm identity of the user.

However, current financial management service is prone to problems such as stolen password or identity recognition device, theft or replication, and financial management service personnel is required to standby and assist confirming identity of the user. Therefore, personal property is insecure and labor cost for financial management service is increased.

Therefore, there is an unmet need in the industry to provide a multi-factor authentication system to increase security of property management and financial management, enable additional identity authentication for user and secure private information of the user.

### Summary of the Invention

A multi-factor authentication system for financial management may include an user device, a financial management station system and a multi-factor authentication service platform. The user device may include an application, a first data processing unit and an user device display. The application may process and transmit first biometric data and second biometric data. The first data processing unit may capture and transmit the first biometric data and the second biometric data. The user device display couple to the first data processing unit and display the first biometric data and the second biometric data. The financial management station system may include a financial management apparatus and a cloud financial management station server apparatus. The financial management apparatus may receive a first authentication factor and a second authentication factor from an user, process the second authentication factor to generate second-authentication-factor-authentication-successful instruction, and transmit the second-authentication-factor-authentication-successful instruction and the first authentication factor. The cloud financial management station server apparatus may couple to the user device and the financial management apparatus and receive and transmit the first biometric data from the user device and process the second-authentication-factor-authentication-successful instruction and the first authentication factor from the financial management apparatus. The multi-factor authentication service platform may include a cloud biometric server apparatus. The cloud biometric server apparatus may couple to the cloud financial management station server apparatus and the user device and process the first biometric data from the cloud financial management station server apparatus, extract biometric feature according to the first biometric data, process the second biometric data from the user device, authenticate the second biometric data to generate a user-authentication-successful instruction and transmit the biometric feature, the user-authentication-successful instruction and user metadata.

Based on the above, the multi-factor authentication system for financial management may not only address concerns for the user property security and identity authentication during financial management, but may also further provide the following improvements and technical effects:
i. the cloud biometric server apparatus of the multi-factor authentication service platform may encode the biometric data (id est, the biometric data that act as authentication factor, such as, but not limited to, facial image of the user) provided by the user to be unrecognizable for external system, external device and external personnel, such that security for authentication factor of the user may be improved.
ii. the cloud biometric server apparatus of the multi-factor authentication service platform may only extract biometric feature of the biometric data without storing the same. Meaning security for authentication factor of the user may be improved and the restricted data is kept from leaking. Further, the cost for the cloud biometric server apparatus of the multi-factor authentication service platform may be reduced (id est, the database for storing the biometric feature may be omitted for the cloud biometric server apparatus), and the identity authentication may be sped up.

### Brief Description of the Drawings

FIG. 1 is a schematic diagram of the multi-factor authentication system for financial management.
FIG. 2 is a schematic diagram of the multi-factor authentication system for financial management.
FIG. 3 is a schematic diagram of communication relationship (indicated by arrows) between elements and compositions of the elements of the multi-factor authentication system for financial management.
FIG. 4 is schematic diagram of implementation process for enrollment phase with the multi-factor authentication system for financial management, where the arrows are shown to depict the steps for the implementation process.
FIG. 5 is a schematic diagram of communication relationship (indicated by arrows) between elements and compositions of the elements of the multi-factor authentication system for financial management.
FIG. 6A is a schematic diagram of implementation process for authentication phase with the multi-factor authentication system for financial management.
FIG. 6B is a schematic diagram of implementation process for authentication phase with the multi-factor authentication system for financial management.

### Detailed Description

The following descriptions of the embodiments illustrate implementations of the present invention, and those skilled in the art of the present invention can readily understand the advantages and effects of the present invention and/or apply the present invention to other embodiments in accordance with the contents herein. Therefore, any factors described in the present invention may be combined with any other factors disclosed in embodiments of the present invention.

The orders of drawings shown in accompanying drawings of this disclosure are only used to illustrate embodiments described herein, such that those with ordinary skill in the art can read and understand the present invention therefrom, of which are not intended to limit the scope of this disclosure. Any changes, modifications, or adjustments of said features, without affecting the designed purposes and effects of the present invention, should all fall within the scope of technical content of this disclosure.

As used herein, when describing an object "comprises," "includes" or "has" a limitation, unless otherwise specified, it may additionally encompass other elements, structures, apparatus, devices, systems, steps, connections, modules, units, et cetera, and should not exclude others. Further, unless otherwise specified, wordings in singular forms such as "a," "an" and "the" also pertain to plural forms, and wordings such as "or" and "and/or" may be used interchangeably.

As used herein, the terms "user," "consumer" and the like may be used interchangeably.

As used herein, the terms "comprise," "include," "have," or any other variations thereof are intended to cover a non-exclusive inclusion. For example, an apparatus, device, module, unit, process or system that comprises a list of elements is not necessarily limited to only those elements, but may include other elements not expressly listed, or inherent to such apparatus, device, module, unit, process or system.

As used herein, the phrase "at least one," in reference to a list of one or more elements, should be understood to mean at least one element selected from any one or more of the elements in the list of elements, but not necessarily including at least one of each and every element listed within the list of elements and not excluding any combinations of elements in the list of elements. This definition also allows that elements may optionally be present other than the elements identified within the list of elements to which the phrase "at least one" refers, whether related or unrelated to those elements identified. Thus, as a non-limiting example, "at least one of A and B" (or, equivalently, "at least one of A or B," or, equivalently, "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements).

As used herein, the term "authentication" may be interchangeable with likes of "confirm," "authorization," "judgment," "determination," "examination," "evaluation," "ratify," "verification," and "inspection." During an event to authenticate a piece of message, data or command, phrases such as "data authentication," "authenticate command," "confirm data," or "confirm command" may be expressed.

As used herein, the terms "biometric" and "biometric technique" may be interchangeable.

As used herein, the element "financial management apparatus" may be used to provide user financial management service for a user, and may be realized as automated teller machine, smart teller machine (STM), self-service kiosk and/or self-service deposit machine, the present invention is not limited thereto.

As used herein, the element "financial management station" may refer to financial institution (such as bank, security dealer, future dealer, insurance company, or electronic ticket company) and/or company owning the automated teller machine (ATM) or financial management, of which the present invention is not limited thereto.

As used herein, the element "user device" may refer to a smart phone having imaging functionalities, a tabloid computer having imaging functionalities, a laptop having imaging functionalities, or a wearable electrical device having imaging functionalities, of which the present invention is not limited thereto.

As used herein, the term "first authentication factor" may refer to user identifier and/or card number. The first authentication factor may be obtained from a substantial credit card, debit card, and/or electronic ticket, of which the present invention is not limited thereto.

As used herein, the term "second authentication factor" may refer to user password, but the present invention is not limited thereto.

As used herein, the term "user metadata" may refer to user identifier, user biometric feature transformed into a specific vector data, field identifier, apparatus identifier and/or device identifier, of which the present invention is not limited thereto.

As used herein, the term "field" may refer to location or space for placing the financial management apparatus (such as automated teller machine (ATM), smart teller machine (STM), self-service kiosk and/or self-service deposit machine), but the present invention is not limited thereto.

As used herein, the term "first biometric data" may refer to biology characteristics of a user obtained during an enrollment phase of with the multi-factor authentication system for financial management, and may include facial visual trait of the user, voice trait of the user, fingerprint trait of the user, retinal trait of the user, vein distribution trait on finger of the user, iris trait of the user, palm print trait of the user, and/or the blood vessels trait of the user, of which the present invention is not limited thereto.

As used herein, the term "second biometric data" may refer to biology characteristics of the user obtained during authentication phase of the multi-factor authentication system for financial management, such as the biometric characteristics obtained through application installed on the user device while operating the financial management apparatus (such as, but not limited to automated teller machine (ATM)). The biometric characteristics may include, but not limited to, facial visual trait of the user, voice trait of the user, fingerprint trait of the user, retinal trait of the user, vein distribution trait on finger of the user, iris trait of the user, palm print trait of the user, and/or the blood vessels trait of the user.

A multi-factor authentication system for financial management is provided for a user. The user may enroll in service for multi-factor authentication via an application (such as, but not limited to, the application installed on the user device), thereby to acquire financial management service in convenience and secure manner. The user may obtain account (such as, but not limited to, consumer authorization for financial management station) and user authority via logging in at the enrollment phase for the multi-factor authentication service platform, thereby to access service of the multi-factor authentication service platform via financial management station system. Additionally, the authentication phase of the multi-factor authentication service platform may enable access to financial management service for the user in fewer steps, in more secure manner, and with enforced security for identification during the financial management service.

In at least one embodiment, the user device further includes an user device connection unit coupled to the first data processing unit and the user device display and may be used to provide internet connection for transmitting the first biometric data and the second biometric data.

In at least one embodiment, the first biometric data may be biology characteristics of the user obtained during enrollment phase with the multi-factor authentication system.

In at least one embodiment, the second biometric data may be characteristics of the user obtained during authentication phase with the multi-factor authentication system.

In at least one embodiment, the financial management apparatus includes a second data processing unit and a financial management apparatus connection unit. The second data processing unit may be used to receive and transmit the first authentication factor from the user, receive and process the second authentication factor to generate and transmit a second-authentication-factor-authentication-successful instruction. The financial management apparatus connection unit is coupled with the second data processing unit and may be used to provide internet connection for transmitting the second-authentication-factor-authentication-successful instruction and the first authentication factor.

In at least one embodiment, the cloud financial management station server apparatus includes a third data processing unit, an authentication unit and a cloud financial management station server apparatus connection unit. The third data processing unit may be used to receive and transmit the first biometric data from the user device, receive the biometric feature, the user-authentication-successful instruction and the user metadata from the cloud biometric server apparatus and transmit the biometric feature and the user metadata, receive the second-authentication-factor-authentication-successful instruction from the financial management apparatus, receive and transmit the first authentication factor from the financial management apparatus. The authentication unit is coupled with the third data processing unit and may be used to acquire the first authentication factor and the user metadata, authenticate the user, generate a first-authentication-factor-authentication-successful instruction and a financial-management instruction, and transmit the financial-management instruction. The cloud financial management station server apparatus connection unit is coupled with the authentication unit and may be used to provide internet connection for transmitting the biometric feature, the first-authentication-factor-authentication-successful instruction and a financial-management instruction.

In at least one embodiment, the cloud financial management station server apparatus further includes a database coupled with the cloud financial management station server apparatus connection unit and may be used to store biometric feature.

In at least one embodiment, the cloud biometric server apparatus includes a fourth data processing unit with a financial pool and a cloud biometric server apparatus connection unit. The fourth data processing unit with the financial pool may be used to receive the first biometric data from the cloud financial management station server apparatus, generate and transmit the biometric feature, receive the first-authentication-factor-authentication-successful instruction from the cloud financial management station server apparatus, receive and authenticate the second biometric data from the user device to generate and transmit the user-authentication-successful instruction and the user metadata. The user metadata may be stored in the financial pool for a predetermined period of time. The cloud biometric server apparatus connection unit is coupled with the fourth data processing unit and may be used to provide internet connection for transmitting the user-authentication-successful instruction and the user metadata.

In at least one embodiment, the predetermined period of time may be between 1 minute and 20 minutes.

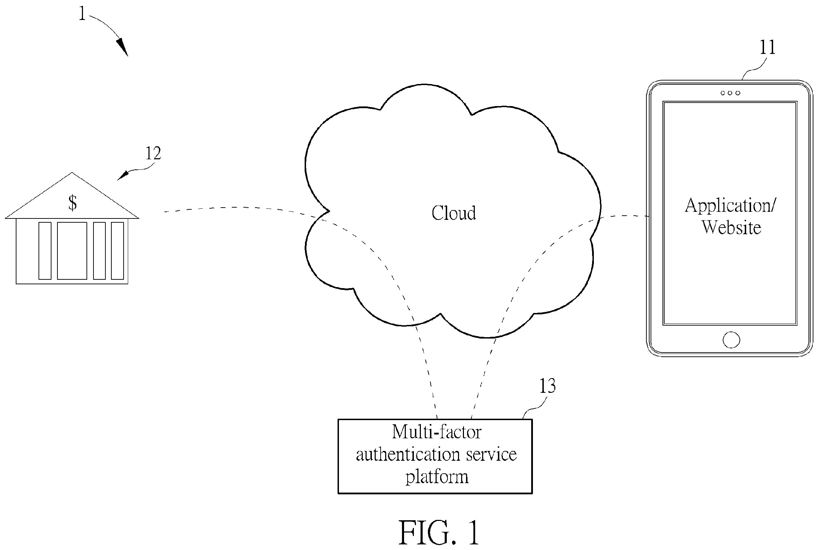

FIG. 1 is a schematic diagram of the multi-factor authentication system 1 for financial management, including an user device 11, an application executed by the user device 11 or a website executed by the application, a financial management station system 12 and a multi-factor authentication service platform 13. The user device 11, the financial management station system 12 and the multi-factor authentication service platform 13 may be connected with each other via any suitable wired or wireless manner.

In some embodiments, the multi-factor authentication system 1 for financial management may enable user to login the application installed at the user device 11 during the enrollment phase, the application to transmit the first biometric data (such as, but not limited to facial image) acquired from the user, via the cloud financial management station server apparatus 122 to the cloud biometric server apparatus 131 of the multi-factor authentication service platform 13 for transformation (such as but not limited to transforming the first biometric data into vector data), the cloud biometric server apparatus 131 to transmit the transformed first biometric data back to the financial management station server apparatus 122, the financial management station server apparatus 122 to store the transformed first biometric data in the database 1224, and the user to perform the subsequent identity authentication using the financial management service provided by the financial management system 12.

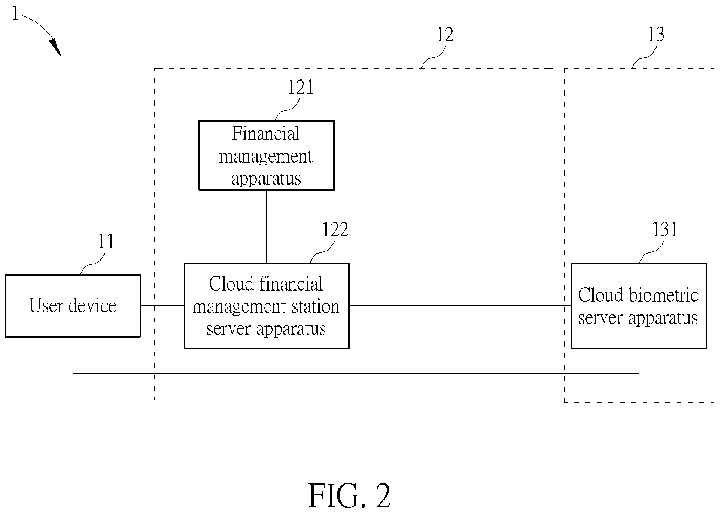

FIG. 2 is a schematic diagram of the multi-factor authentication system 1 for financial management, including an user device 11, an financial management apparatus 121, a cloud financial management station server apparatus 122 and a cloud biometric server apparatus 131. The elements of the multi-factor authentication system 1 for financial management may be connected with each other via any suitable wired or wireless manner.

In some embodiments, the user device 11 may be used to process the first biometric data and the second biometric data to complete enrollment phase and authentication phase with the multi-factor authentication system 1 for financial management. The user device 11 may be realized as a smartphone with camera lens, a tabloid computer with camera lens, a notebook computer with camera lens, or a wearable electronic device with camera lens. In some embodiments, the user device 11 may be disposed with the application corresponding to the multi-factor authentication system 1 for financial management or website executed by the application. The user may initiate the camera functionality of the user device 11 and acquire the biometric characteristics of the user during the enrollment phase.

In some embodiments, the financial management apparatus 121 may be used to receive the first authentication factor and the second authentication factor from the user and provide financial management service. The financial management apparatus 121 may be realized as an automated teller machine (ATM), a smart teller machine (STM), a self-service kiosk and/or self-service deposit machine.

In some embodiments, the cloud financial management station server apparatus 122 may be used to receive and transmit the first biometric data from the user device 11, process the first authentication factor from the financial management apparatus 121.

In some embodiments, the cloud biometric server apparatus 131 may be used to process the first biometric data form the cloud financial management station server apparatus 122 and the second biometric data from the user device 11, and generate the user-authentication-successful instruction, and transmit the user-authentication-successful instruction and the user metadata to the cloud financial management station server apparatus 122.

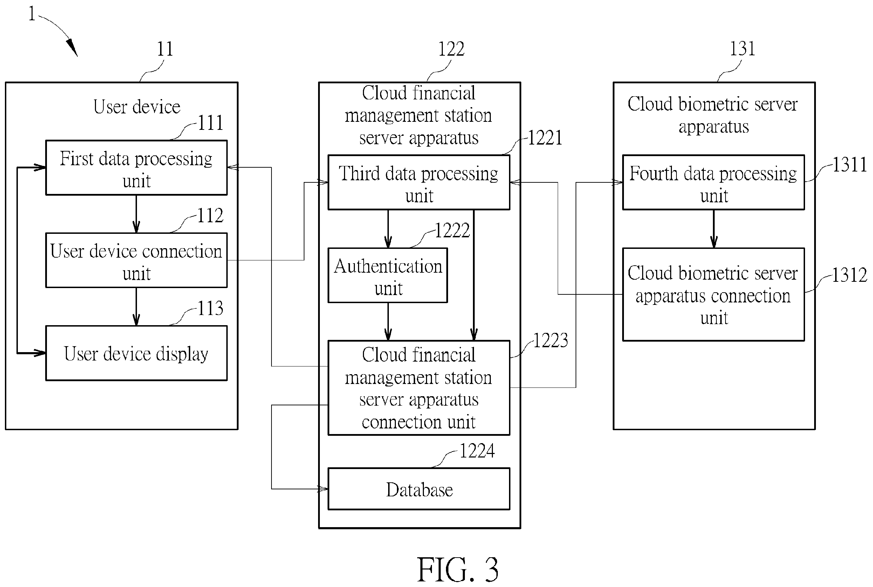

FIG. 3 is a schematic diagram of communication relationship (indicated by arrows) between elements and compositions of the elements of the multi-factor authentication system 1 for financial management.

In some embodiments, the user device 11 includes the first data processing unit 111, the user device connection unit 112 and the user device display 113.

In some embodiments, the first data processing unit 111 may be used to generate user data, extract the first biometric data, and transmit the user data and the first biometric data to the cloud financial management station server apparatus 122 for identity authentication, account acquisition, and authority for using multi-factor authentication service platform 13. The user device connection unit 112 may be an internet connection unit for providing point-to-point internet connection, and may be used to transmit the user data and the first biometric data. The user device display 113 may be used to display the user data and the first biometric data for confirmation by the user upon generation.

In some embodiments, the cloud financial management station server apparatus 122 includes a third data processing unit 1221, an authentication unit 1222 and a cloud financial management station server apparatus connection unit 1223.

In some embodiments, the cloud financial management station server apparatus 122 further includes a database 1224 for storing biometric features. The biometric features may be used to establish financial management membership file folder for the user. The database 1224 may be realized as any suitable data storage device, system, cloud storage space or the like, and the present invention is not limited thereto.

In some embodiments, the cloud biometric server apparatus 131 includes a fourth data processing unit 1311 and a cloud biometric server apparatus connection unit 1312.

In some embodiments, the third data processing unit 1221 of the cloud financial management station server apparatus 122 may be used to receive and transmit the user data from the user device 11 to the authentication unit 1222. The authentication unit 1222 may be used to authenticate the user data for correctness and security and generate and transmit a user-device-authentication-successful instruction to the cloud financial management station server apparatus connection unit 1223 upon a successful authentication. The cloud financial management station server apparatus connection unit 1223 may be used to transmit the user-device-authentication-successful instruction to the user device 11 in request for the first biometric data of the user. The third data processing unit 1221 may receive and transmit the first biometric data from the user, via the cloud financial management station se4rver apparatus connection unit 1223 to the cloud biometric server apparatus 131. The fourth data processing unit 1311 of the cloud biometric server apparatus 131 may be used to receive the first biometric data and extract and transmit the biometric feature of the first biometric data to the cloud biometric server apparatus connection unit 1312. The cloud biometric server apparatus connection unit 1312 may be an internet connection unit for providing point-to-point internet connection and transmitting the biometric feature to the third data processing unit 1221 of the cloud financial management station server apparatus 122. The third data processing unit 1221 may be used to receive and transmit the biometric feature, via the cloud financial management station server apparatus connection unit 1223, to the database 1224 for storage.

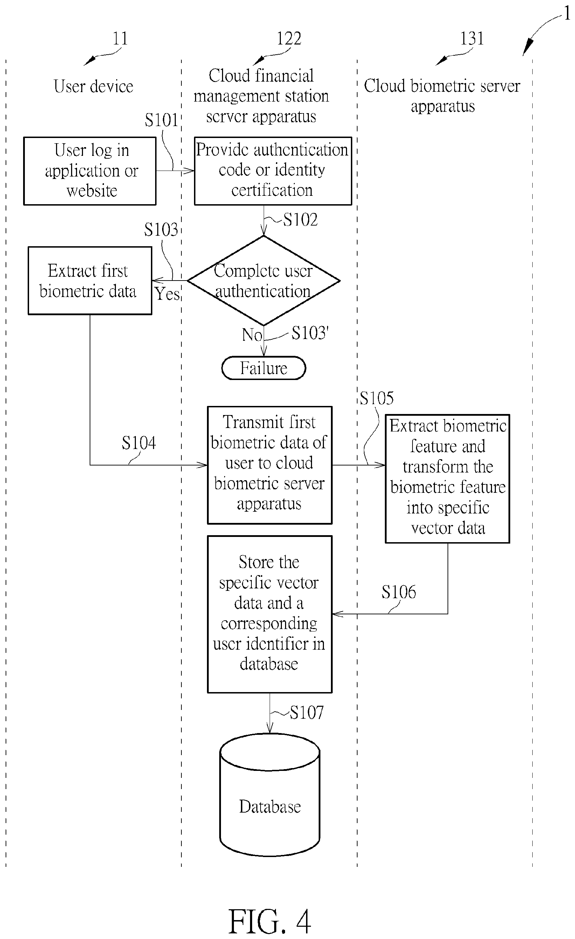

FIG. 4 is schematic diagram of implementation process for enrollment phase with the multi-factor authentication system 1 for financial management, where the arrows are shown to depict the steps for the implementation process.

In some embodiments, the application executed on the user device 11 or the website executed by the application may enable log in by the user, authenticate identity of the user through the cloud financial management station server apparatus 122 of the financial management station system 12, and extract and provide the first biometric data of the user, via the cloud financial management station server apparatus 122, to the cloud biometric server apparatus 131 of the multi-factor authentication service platform 13. The cloud biometric server apparatus 131 may be used to transform and transmit the first biometric data to the cloud financial management station server apparatus 122. The cloud financial management station server apparatus 122 may be used to store the transformed first biometric data in the database 1224. For example, the user may transmit the user data (such as, but not limited to, user name, user password, et cetera), via the application or the website executed by the application, to the cloud financial management station server apparatus 122 (Step S101). The cloud financial management station server apparatus 122 may authenticate identity of the user according to the user data and generate authentication code or identity certificate (Step S102). The authentication code or the identity certificate may be provided, via interface of the application or the website executed by the application, to the user. The cloud financial management station server apparatus 122 may guide the application or the website executed by the application to a photo-shoot interface and request for the first biometric data (such as, but not limited to, facial image) of the user (Step S103). In some other embodiments, step S102 may be omitted. That is, the cloud financial management station server apparatus 122 may authenticate the identity of the user according to the user data, and guide the application or the website executed by the application to a photo-shoot interface and request for the first biometric data (such as, but not limited to, facial image) of the user (Step S103) upon a successful authentication. The application may transmit the first biometric data of the user to the cloud financial management station server apparatus 122 (Step S104). The cloud financial management station server apparatus 122 may transmit the first biometric data to the cloud biometric server apparatus 131 (Step S105). The cloud biometric server apparatus 131 may extract the biometric feature of the first biometric data, transform the biometric feature into a specific vector data and transmit the specific vector data to the cloud financial management station server apparatus 122 (Step S106). The cloud financial management station server apparatus 122 may store the specific vector data and a corresponding user identifier (user ID) in the database 1224 in a vector mode (Step S107). For example, during a subsequent identity authentication phase, a vector data point may be determined or extracted from the database 1224 quickly to execute identity authentication.

In some embodiments, the database 1224 may be a vector database, and may be used to provide user identifier management, first biometric data management, second biometric data management, identity authentication, data access management and data search (such as, but not limited to, search engine), of which the present invention is not limited thereto.

In some embodiments, before the first biometric data is transmitted by the cloud financial management station server apparatus 122 to the cloud biometric server apparatus 131 and/or after the specific vector data is transmitted to the cloud financial management station server apparatus 122, the cloud biometric server apparatus 131 of the multi-factor service platform 13 will not store the specific vector data transformed from the biometric feature.

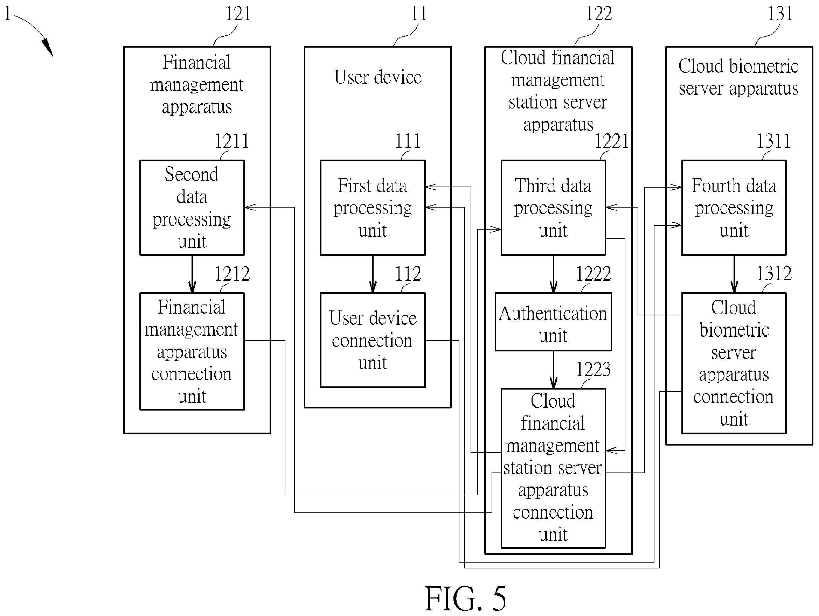

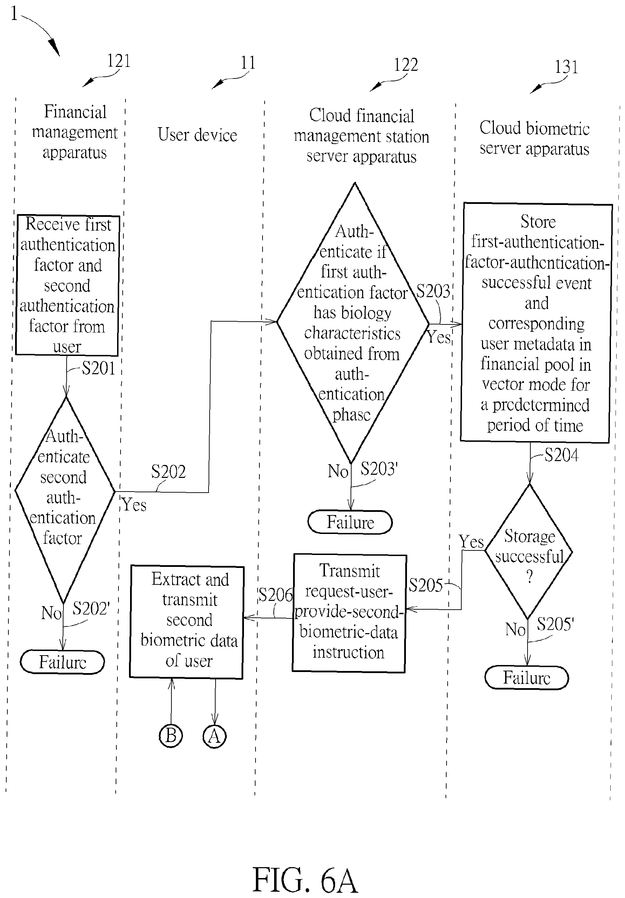

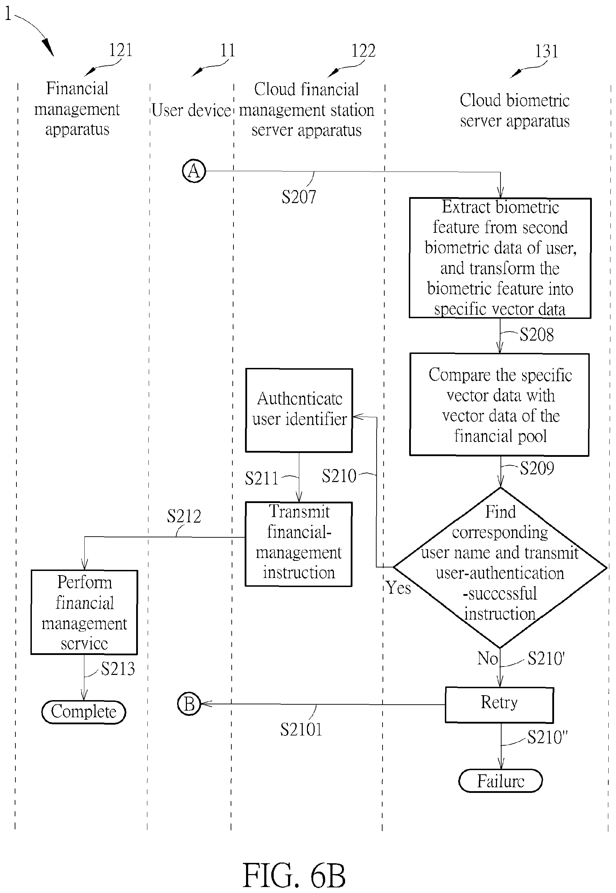

FIG. 5 is a schematic diagram of communication relationship (indicated by arrows) between elements and compositions of the elements of the multi-factor authentication system 1 for financial management. FIG. 6A and FIG. 6B is a schematic diagram of implementation process for authentication phase with the multi-factor authentication system 1 for financial management, where the arrows are shown to depict the steps for the implementation process.

In some embodiments, the financial management apparatus 121 includes a second data processing unit 1211 and a financial management apparatus connection unit 1212.

In some embodiments, the user device 11 includes a first data processing unit 111 and a user device connection unit 112.

In some embodiments, the cloud financial management station server apparatus 122 includes a third data processing unit 1221, an authentication unit 1222 and a cloud financial management station server apparatus connection unit 1223.

In some embodiments, the cloud biometric server apparatus 131 includes a fourth data processing unit 1311 and a cloud biometric server apparatus connection unit 1312.

In some embodiments, the second data processing unit 1211 (such as, but not limited to, card reader or financial management unit) of the financial management apparatus 121 (such as, but not limited to, automated teller machine (ATM)) may receive and transmit the first authentication factor from the user (such as, but not limited to, user name, user identifier and/or card number) (Step S201 and Step S202), receive and process the second authentication factor (such as, but not limited to, user password), and generate and transmit a second-authentication-factor-authentication-successful instruction (Step S201 and Step S202).

For example, the user may insert a debit card in a card reader during operation of automated teller machine (ATM). The card reader may transmit the card number of the debit card to the financial management unit to confirm validity with database of the financial management unit. If the card number is present within the database of the financial management unit, the financial management unit may request the user to input the user password, and compare the user password with a password corresponding to the card number in the database. If comparison result is successful, the financial management unit may generate the second-authentication-factor-authentication-successful instruction and transmit, via the financial management apparatus connection unit 1212, the second-authentication-factor-authentication-successful instruction and the first authentication factor (Step S201 and Step S202). If comparison result is failure, the financial management unit may generate and transmit the second-authentication-factor-authentication-unsuccessful instruction to the card reader, and the display unit of the card reader may display "failure" accordingly (Step S202').

In some embodiments, the third data processing unit 1221 of the cloud financial management station server apparatus 122 may receive the second-authentication-factor-authentication-successful instruction and the first authentication factor from the financial management apparatus 121 and transmit the first authentication factor to the authentication unit 1222. The authentication unit 1222 may authenticate the first authentication factor, generate a first-authentication-factor-authentication-successful instruction and a financial-management instruction, and transmit the financial-management instruction to the cloud financial management station server apparatus connection unit 1223.

For example, the third data processing unit 1221 of the cloud financial management station server apparatus 122 may receive and transmit the first authentication factor (such as, but not limited to, user name, user identifier, and/or card number) to the authentication unit 1222. The authentication unit 1222 may authenticate if the user has the biology characteristics obtained from the enrollment phase according to the first authentication factor. If authentication is successful, the authentication unit 1222 may generate the first-authentication-factor-authentication-successful instruction and a first-authentication-factor-authentication-successful event and transmit the first-authentication-factor-authentication-successful instruction, the first-authentication-factor-authentication-successful event, and the first authentication factor to the cloud biometric server apparatus 131 (Step S203). If authentication is unsuccessful, the authentication unit 1222 may generate a first-authentication-factor-authentication-unsuccessful instruction. The fourth data processing unit 1311 with the financial pool of the cloud biometric server apparatus 131 may receive the first-authentication-factor-authentication-successful instruction, the first-authentication-factor-authentication-successful event, and the first authentication factor and store the first-authentication-factor-authentication-successful event, the first authentication factor, and the corresponding user metadata (such as, but not limited to, user identifier, the specific vector data transformed from the biometric feature of the user, field identifier, apparatus identifier and/or device identifier) in the financial pool in vector mode for a predetermined period of time (Step S204). The financial pool may be used to extract, transform or read the user metadata. If storage of the first-authentication-factor-authentication-successful event, the first authentication factor, and the corresponding user metadata is successful, the fourth data processing unit 1311 with the financial pool of the cloud biometric server apparatus 131 may generate a storage-successful instruction (Step S205), and transmit the storage-successful instruction, via the cloud biometric server apparatus connection unit 1312, to the cloud financial management station server apparatus 122. If storage of the first-authentication-factor-authentication-successful event, the first authentication factor, and the corresponding user metadata is unsuccessful, the fourth data processing unit 1311 with the financial pool of the cloud biometric server apparatus 131 may generate a storage-unsuccessful instruction (Step S205').

In some embodiments, the term "predetermined period of time" may be set and adjusted according to requirements of the multi-factor authentication service platform. For example, the predetermined period of time may be between 1 minute and 20 minutes, 1 minute and 15 minutes, 1 minute and 10 minutes, 1 minute and 5 minutes, 1 minute and 2 minutes, 2 minutes and 20 minutes, 2 minutes and 15 minutes, 2 minutes and 10 minutes, 2 minutes and 5 minutes, 5 minutes and 20 minutes, 5 minutes and 15 minutes, 5 minutes and 10 minutes, 10 minutes and 20 minutes, 10 minutes and 15 minutes or 15 minutes and 20 minutes, but the present invention is not limited thereto.

In some embodiments, the third data processing unit 1221 of the cloud financial management station server apparatus 122 may receive the storage-successful instruction, generate a request-user-provide-second-biometric-data instruction, and transmit the request-user-provide-second-biometric-data instruction, via the cloud financial management station server apparatus connection unit 1223 to the user device (Step S206).

In some embodiments, the first data processing unit 111 of the user device may be used to receive the request-user-provide-second-biometric-data instruction from the cloud financial management station server apparatus 122, extract the second biometric data (such as, but not limited to, facial image of the user) of the user according to the request-user-provide-second-biometric-data instruction, transmit the second biometric data, via the user device connection unit 112, to the cloud biometric server apparatus 131 (Step S207).

In some embodiments, the fourth data processing unit 1311 with the financial pool of the cloud biometric server apparatus 131 may receive the second biometric data, extract and transform the biometric feature of the second biometric data into a specific vector data (Step S208), and compare the specific vector data with the data of the financial pool to look up user data (such as, but not limited to, user name) corresponding to the biometric feature Step S209). If look up for the corresponding user data is successful, the fourth data processing unit 1311 with the financial pool may generate a request-user-identifier-authentication instruction and transmit the request-user-identifier-authentication instruction and the user metadata, via the cloud biometric server apparatus connection unit 1312, to the cloud financial management station server apparatus 122 (Step S210). If look up for the corresponding user data is unsuccessful, a retry attempt may be conducted (Step S210'). When the retry attempt is failed, the fourth data processing unit 1311 with the financial pool may generate a look-up-unsuccessful instruction (id est, the user may not operate the financial management service) (Step S210") or request the user device 11 to extract the second biometric data from the user again (such as, but not limited to, have the facial image of the user photographed once again) (Step S2101). The third data processing unit 1221 of the cloud financial management station server apparatus 122 may receive the request-user-identifier-authentication instruction and the user metadata and transmit the user metadata to the authentication unit 1222 for authentication of user identifier (Step S211). For example, the user metadata may be compared with user identifier stored in the database 1224 (such as, but not limited to, vector database). If a corresponding user identifier for the user metadata is present, the authentication unit 1222 may complete the authentication process and generate a financial-management instruction (Step S212) and transmit the financial-management instruction, via the cloud financial management station server apparatus connection unit 1223 to the financial management apparatus 121. The second data processing unit 1211 of the financial management apparatus 121 may receive the financial-management instruction and unlock the financial management apparatus 121 (exempli gratia, the user may be enabled to select various financial service option via user interface of the automated teller machine (ATM)) to provide financial management service for the user (Step S213).

In some embodiments, before transmitting the first-authentication-factor-authentication-successful event, the first authentication factor, and the first authentication factor to the cloud biometric server apparatus 131 and/or storing the first-authentication-factor-authentication-successful event, the first authentication factor, and the corresponding user metadata in the financial pool in vector mode for the predetermined period of time set by the multi-factor authentication service platform 13, the cloud biometric server apparatus 131 of the multi-factor authentication service platform 13 may not store the first authentication factor and the corresponding user metadata. Before transmitting the second biometric data, via the user device connection unit 112, to the cloud biometric server apparatus 131 and/or after the fourth data processing unit 1311 with the financial pool generating the request-user-identifier-authentication instruction and transmitting the request-user-identifier-authentication instruction and the user metadata, via the cloud biometric server apparatus connection unit 1312, to the cloud financial management station server apparatus 122, the cloud biometric server apparatus 131 of the multi-factor authentication service platform 13 may not store the specific vector data transformed from the second biometric data.

Each unit of FIG. 2, FIG. 3 and FIG. 5 may be realized as software, hardware, or firmware. If said unit is software or firmware, the unit may include command executable by a unit, processor, computer or server. If said unit is hardware, the unit may be a module, processor, computer, or server capable of data processing and computing.

In some embodiments, the elements of the multi-factor authentication system 1 for financial management may be respectively realized as any suitable computing device, apparatus, application, system or the like, and the present invention is not limited thereto. In some embodiments, any two or three of the third data processing unit 1211, the authentication unit 1222 and the cloud financial management station server apparatus connection unit 1223 of the cloud financial management station server apparatus 122 may be integrated as one unit instead of being realized as three standalone units. However, without straying away from operational concepts described in the present invention, arrangements of the elements of the multi-factor authentication system 1 may be realized in any suitable formats and should not limit the present invention in any way.

## Claims

1. A multi-factor authentication system (1) for financial management, comprising:
an user device (11) comprising:
an application configured to process and transmit first biometric data and second biometric data;
a first data processing unit (111) configured to capture and transmit the first biometric data and the second biometric data; and
an user device display (113) coupled to the first data processing unit (111) and configured to display the first biometric data and the second biometric data;
a financial management station system (12) comprising:
a financial management apparatus (121) configured to receive a first authentication factor and a second authentication factor from an user, process the second authentication factor to generate second-authentication-factor-authentication-successful instruction, and transmit the second-authentication-factor-authentication-successful instruction and the first authentication factor; and
a cloud financial management station server apparatus (122) coupled to the user device (11) and the financial management apparatus (121) and configured to receive and transmit the first biometric data from the user device (11) and process the second-authentication-factor-authentication-successful instruction and the first authentication factor from the financial management apparatus (121); and
a multi-factor authentication service platform (13) comprising:
a cloud biometric server apparatus (131) coupled to the cloud financial management station server apparatus (122) and the user device (11) and configured to process the first biometric data from the cloud financial management station server apparatus (122), extract biometric feature according to the first biometric data, process the second biometric data from the user device (11), authenticate the second biometric data to generate a user-authentication-successful instruction and transmit the biometric feature, the user-authentication-successful instruction and user metadata.

2. The multi-factor authentication system (1) of Claim 1, wherein the user device (11) further comprises:
an user device connection unit (112) coupled to the first data processing unit (111) and the user device display (113) and configured to provide internet connection for transmitting the first biometric data and the second biometric data.

3. The multi-factor authentication system (1) of Claim 2, wherein the first biometric data is biology characteristics of the user obtained from enrollment phase with the multi-factor authentication system (1).

4. The multi-factor authentication system (1) of Claim 2, wherein the second biometric data is biology characteristics of the user obtained from authentication phase with the multi-factor authentication system (1).

5. The multi-factor authentication system (1) of Claim 1, wherein the financial management apparatus (121) comprises:
a second data processing unit (1211) configured to receive the first authentication factor from the user, receive and process the second authentication factor from the user to generate the second-authentication-factor-authentication-successful instruction, and transmit the first authentication factor and the second-authentication-factor-authentication-successful instruction; and
a financial management apparatus connection unit (1212) coupled to the second data processing unit (1211) and configured to provide internet connection for transmitting the first authentication factor and the second-authentication-factor-authentication-successful instruction.

6. The multi-factor authentication system (1) of Claim 1, wherein the cloud financial management station server apparatus (122) comprising:
a third data processing unit (1221) configured to receive the first biometric data from the user device (11), the biometric feature, the user-authentication-successful instruction and the user metadata from the cloud biometric server apparatus (131), the second-authentication-factor-authentication-successful instruction from the financial management apparatus (121), and first authentication factor from the financial management apparatus (121), and transmit the first biometric data, the biometric feature, the user metadata, the first authentication factor;
an authentication unit (1222) coupled to the third data processing unit (1221) and configured to acquire the first authentication factor and the user metadata to authenticate the user and generate a first-authentication-factor-authentication-successful instruction and a financial-management-instruction, and transmit the financial-management-instruction; and
a cloud financial management station server apparatus connection unit (1223) coupled to the authentication unit (1222) and configured to provide internet connection for transmitting the biometric feature, the first-authentication-factor-authentication-successful instruction and the financial-management-instruction.

7. The multi-factor authentication system (1) of Claim 6, wherein the cloud financial management station server apparatus (122) further comprises:
a database (1224) coupled to the cloud financial management station server apparatus connection unit (1223) and configured to store the biometric feature.

8. The multi-factor authentication system (1) of Claim 1, wherein the cloud biometric server apparatus (131) comprises:
a fourth data processing unit (1311) having a financial pool configured to receive the first biometric data and the first-authentication-factor-authentication-successful instruction from the cloud financial management station server apparatus (122) and the second biometric data from the user device (11), generate the biometric feature from the first biometric data, authenticate the second biometric data to generate the user-authentication-successful instruction and the user metadata, and transmit the biometric feature, the user-authentication-successful instruction and the user metadata; and
a cloud biometric server apparatus connection unit (1312) coupled to the fourth data processing unit (1311) and configured to provide internet connection from transmitting the user-authentication-successful instruction and the user metadata,
wherein the user metadata is stored in the financial pool for a predetermined period of time.

9. The multi-factor authentication system (1) of Claim 8, wherein the predetermined period of time is between 1 minute and 20 minutes.
